# EUROPEAN PATENT SPECIFICATION

(11) **EP 3 875 408 B1**
(45) Date of publication and mention of the grant of the patent: **10.04.2024**
(21) Application number: 21159420.5
(22) Date of filing: 25.02.2021
(51) Int. Cl.: B65G 47/86

(54) **DEVICE FOR TRANSFERRING RECEPTACLES BETWEEN TWO TRANSPORT UNITS AND MACHINE FOR MOVING RECEPTACLES COMPRISING SUCH TRANSFERRING DEVICE**
VORRICHTUNG ZUM ÜBERFÜHREN VON BEHÄLTERN ZWISCHEN ZWEI TRANSPORTEINHEITEN UND MASCHINE ZUM BEWEGEN VON BEHÄLTERN MIT EINER SOLCHEN VORRICHTUNG
DISPOSITIF DE TRANSFERT DE RÉCIPIENTS ENTRE DEUX UNITÉS DE TRANSPORT ET MACHINE POUR DÉPLACER DES RÉCIPIENTS COMPRENANT UN TEL DISPOSITIF DE TRANSFERT

(30) Priority: 05.03.2020 IT 202000004744
(43) Date of publication of application: 08.09.2021
(73) Proprietor: Brevetti CEA SPA, 36050 Sovizzo (VI) (IT)
(72) Inventor: Lanaro, Tiziano, 36061 BASSANO DEL GRAPPA (IT); Sartor, Mariano, 36010 ROANA (IT)
(74) Representative: Muraro, Alfeo Federico

(56) References cited:
- WO-A1-2011/001356
- DE-A1- 10 017 050
- DE-A1-102007 054 388
- US-A- 5 110 282
- US-A1- 2009 127 076

## Description

### Field of application

The present invention is generally applicable to the technical field of machines for moving receptacles through a series of operating stations. More particularly, the object of the invention is a device to be used in the above mentioned machines to transfer receptacles between two transport units having mutually different pitches.

### State of the Art

As it is known, machines for moving receptacles exist, that are used in the automated execution of several industrial processes, such as, for example, the packaging of pharmaceutical preparations in vials, syringes, bottles, and other similar receptacles.

The above mentioned machines comprise a plurality of transport units for moving the receptacles between the different operating stations where corresponding process steps occur, for example the filling with the product, the hermetic closing, the checking of the receptacles, and so on. Each transport unit has a predefined pitch between the receptacles, that determines the distance between two mutually adjacent receptacles.

According to a known technique, a transport unit may take the form of a transport wheel, that in the jargon is called "star", that is provided with recesses on its periphery that correspond to the above mentioned housings, and that is made rotating so that the housings are successively brought in correspondence with each one of the two transport units.

When two consecutive transport units have the same pitch, generally the transfer of the receptacles between them occurs directly, i.e. without using intermediate transfer elements.

Nevertheless, when technical reasons forces the use of different pitches on two consecutive transport units, a variable-pitch transferring device is interposed between them, suited to transfer the receptacles between a transport unit to the other one and that, at the same time, changes the pitch between the receptacles.

According to a first known technique, the above mentioned transferring device comprises a cylindrical element that is provided on its surface with a helicoidal groove that, hence, is called in jargon "cochlea". Each single turn of the groove serves as a housing to receive a corresponding receptacle, in such a way that a rotation of the cylindrical element around its axis causes the translation of the receptacles parallel to the axis of the cylindrical element itself. The cylindrical element has two portions faced to, respectively, the two transport units, while the pitch of the helicoidal groove varies between the above mentioned portions so as to correspond to, respectively, the pitches of the two transport units.

The above mentioned transferring device has the drawback that the relative sliding between the helicoidal groove and the receptacles during the rotation of the cylindrical element may cause superficial scorings on the receptacles if these are made in relatively soft materials, such as, for example, plastic materials. The above mentioned scorings, beyond being unaesthetic, and potentially giving a perception of lower quality of the product, may also cause reading errors during successive checks through vision systems. By consequence, the above mentioned technique is unsuited to be used with receptacles in plastic material or a similar material, particularly in the pharmaceutical field, where a high product quality is required.

A different known technique envisages a transferring device in the form of a wheel that supports radially-sliding arms. Each arm carries a corresponding housing for a receptacle, arranged on the arm's end arranged farther from the rotation axis of the wheel. The above mentioned wheel is interposed between the two consecutive transport units in such a way that, during its rotation, each housing is brought to face the two transport units in succession.

Each arm supports a cam arranged between the rotation axis and the housing, sliding in a groove rigidly connected to the support structure of the machine and developing like an eccentric ring around the rotation axis. As a consequence, the change in radius of the different groove portions during the rotation of the wheel causes a corresponding radial displacement of the cam and, hence a corresponding radial slide of the housing that, in turn, changes the pitch between two consecutive housings, and consequently between the two corresponding receptacles.

Compared to the transferring device described previously, the one according to the above mentioned second known technique has the advantage of avoiding relative displacements between receptacles and housings, thus avoiding the consequent scorings on the receptacles.

On the other hand, the above transferring device has the drawback of being unsuited for the use in machines for which compactness is a need, such as, for example, those of the kind used in the pharmaceutical industry for moving small receptacles such as vials, syringes, and bottles. In fact, the housings are always arranged externally to the groove with respect to the rotation axis of the wheel, and this affects the size of the transferring device, hence the minimum distance between the two transport units, that, anyway, must be long enough to allow accommodating the transferring device in between. On the other hand, the size of the groove can't be reduced below a certain limit, to avoid compromising the sliding of the cams and the precision of movement of the housings.

Document US 5 110 282 A discloses a preform carrying apparatus based on the second one of the above explained techniques. Said document discloses a transferring device according to the preamble of claim 1.

### Presentation of the invention

The present invention aims at overcoming at least partially the above mentioned drawbacks of the prior art.

In particular, it is an aim of the invention to provide a transferring device that may be used in a machine for moving receptacles in order to transfer the receptacles between two transport units belonging to the machine and having mutually different pitches.

It is a further aim of the invention to limit the mutual scratching between the receptacles and the transferring device during the transport, compared to what occurs in the known cochlea-type transferring devices described beforehand.

Another aim of the invention is to obtain a transferring device that is more compact compared to the known star-type transferring devices described beforehand.

Another aim of the invention is to facilitate disassembling the transferring device from the machine.

Moreover, it is an aim of the invention to prevent damage on the transferring device due to fragments belonging to defective receptacles that break during transport, and/or due to the product that might escape therefrom.

The above mentioned aims are obtained by a transferring device according to claim 1.

The above mentioned aims are obtained also by a machine for moving receptacles according to claim 6 comprising the above mentioned transferring device of claim 1.

Further detail features of the invention are specified in the related dependent claims.

Advantageously, the reduced scratch of the receptacles on the transferring device of the invention allows to limit the formation of scorings on the receptacles made in soft materials, such as plastic materials.

Also advantageously, due to its compactness the transferring device of the invention is particularly suited to be used in machines for moving vials, syringes and bottles of the kind used in the pharmaceutical industry.

The above mentioned aims and advantages, together with others hereinafter mentioned, will be apparent from the following description of some preferred embodiments of the invention, that will be explained for exemplary and non-limiting purpose with the help of the enclosed drawings.

### Brief description of the drawings

Fig. 1 represents a portion of the machine of the invention for transferring receptacles, in schematic plan view.
Fig. 2 represents the transferring device of the invention, in axonometric view, and in which one of the receptacles is shown in transparency.
Fig. 3 represents detail III of Fig. 2, in enlarged view.
Fig. 4 represents the transferring device of Fig. 2, in lateral view, crosssectioned according to a plane passing through X1 axis.
Fig. 5 represents the transferring device of Fig. 2, in plan view, crosssectioned according to the plane indicated in Fig. 4 by V-V.
Fig. 6 represents a component of the transferring device of Fig. 2.
Fig. 7 represents the transferring device of Fig. 2, in axonometric and partially exploded view.
Fig. 8 represents a different embodiment of the machine of the invention for transferring receptacles, in axonometric partial view.

### Detailed description of some preferred embodiments

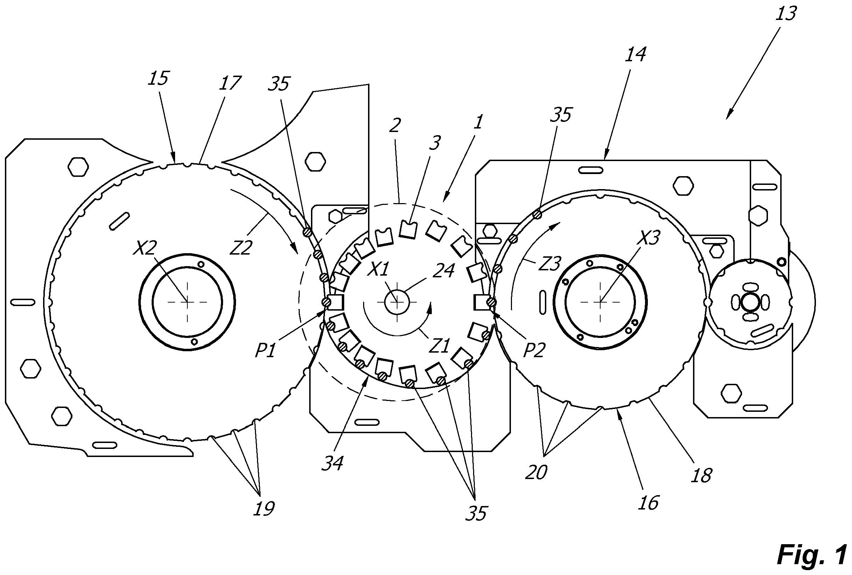

For the sake of simplicity, the transferring device of the invention is being disclosed with reference to a machine **13** for the movement of receptacles, that is schematically represented in Fig. 1. In the above mentioned figure, some receptacles, indicated by **35,** are represented in lateral cross-section.

It is herein specified that, for the sake of graphical simplification and as a general rule, when a drawings depicts several identical elements the reference numeral is indicated for one of them only, despite the same numeral shall be meant to be applied to all the other identical components.

Preferably, the machine **13** is of the kind used in the pharmaceutical industry for packaging pharmaceutical preparations, while the receptacles **35** are vials, syringes, bottles or other similar receptacles for packaging the above mentioned pharmaceutical preparations. However, as the following description will render immediately apparent, the invention can be used in whatever machine for the movement of receptacles, even of a different kind compared to the one described herein, except for adaptations that are in itself evident to the skilled person.

The machine **13** comprises a support structure **14** to lay on the ground, on which two or more transport units **15, 16** are arranged. Each transport unit **15, 16** comprises a respective plurality of housings **19, 20,** each housing being configured to movably support a corresponding receptacle **35.**

The two transport units **15, 16** are associated to motorization means, not represented in the drawings but in itself known, so as to move the receptacles **35** along corresponding trajectories through corresponding operating stations, also not represented in the drawings but in itself known, in which corresponding operations of the packaging process occur on the receptacles **35,** such as, for example, their filling, their sealing, their checking through vision systems, and so on.

The housings **19, 20** of each transport unit **15, 16** are arranged at uniform distances from one another, that define the pitch of the corresponding transport unit. In particular, the pitch of a first transport unit **15** differs from the pitch of the second transport unit **16.** For instance, in the machine **13** represented in Fig. 1, the pitch of a first transport unit **15** arranged upstream according to the advancing direction of the receptacles **35** is smaller than the pitch of the second transport unit **16** arranged downstream.

The machine **13** also comprises a transferring device **1** to transfer the receptacles **35** from the first transport unit **15** to the second transport unit **16.**

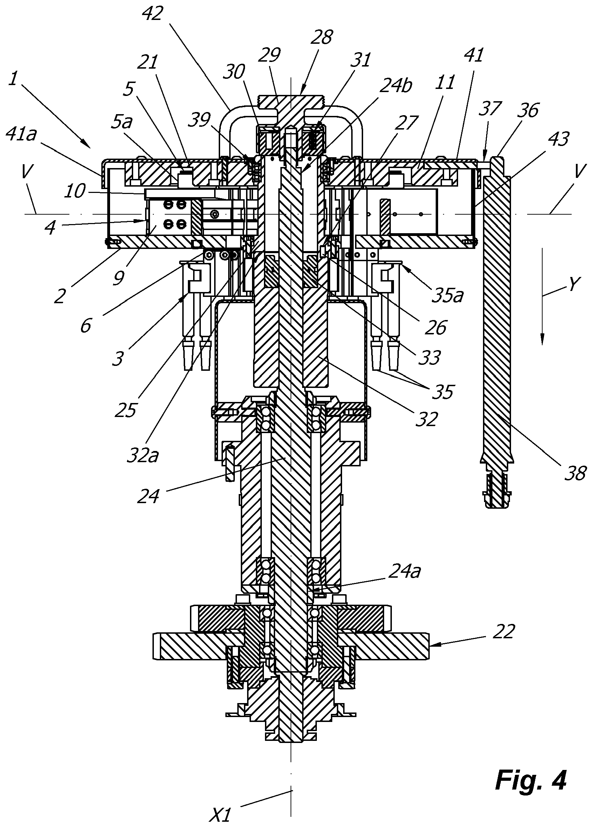

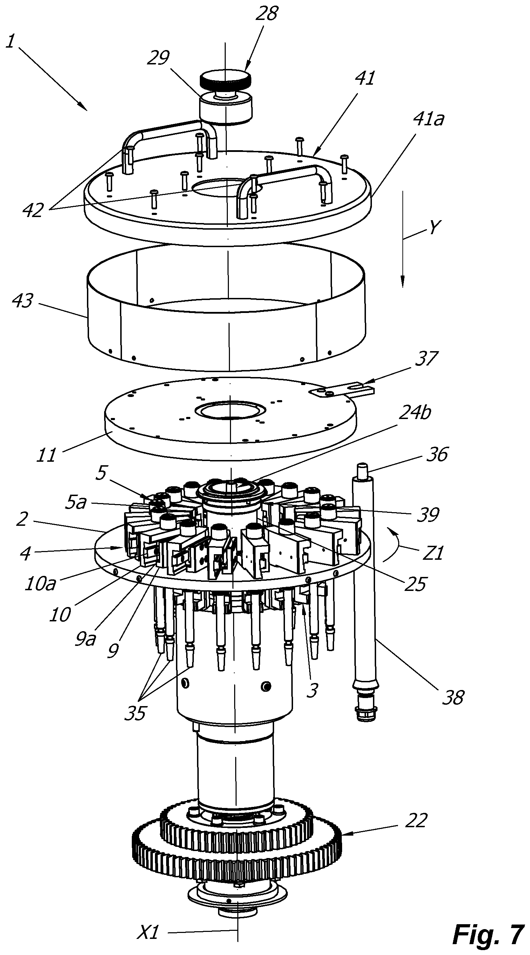

The above mentioned transferring device **1** comprises a first plate **2,** that is preferably disc-shaped. In order to allow viewing the remaining components, the first plate **2** is represented in Fig. 1 only in its profile and in dotted line, but nevertheless it can be better viewed in Figs. 4 and 7. The first plate **2** is rotatably associated to the support structure **14** for rotation around a first rotation axis **X1** and is rotatably motorized around the said axis so as to rotate in a corresponding rotation direction **Z1.**

The transferring device **1** also comprises a plurality of support bodies **3,** each one of which is configured to movably support a corresponding receptacle **35.**

Preferably, each support body **3** defines a corresponding recess **3a,** for example having a cylindrical or conical shape, and having an axis substantially parallel to the first rotation axis **X1,** that is conjugated to a surface of a corresponding receptacle **35.** The machine **13** further comprises, preferably, a guide surface **34** integral with the support structure **14** and facing the above mentioned recess **3a** to define, together with the support bodies **3,** a guide corridor in which receptacles **35** are slidably constrained. In particular, the guide surface **34** maintains the receptacles **35** in contact with the above mentioned recess **3a** of the support body **3** during the movement of the latter between the two angular positions **P1** and **P2** as previously defined.

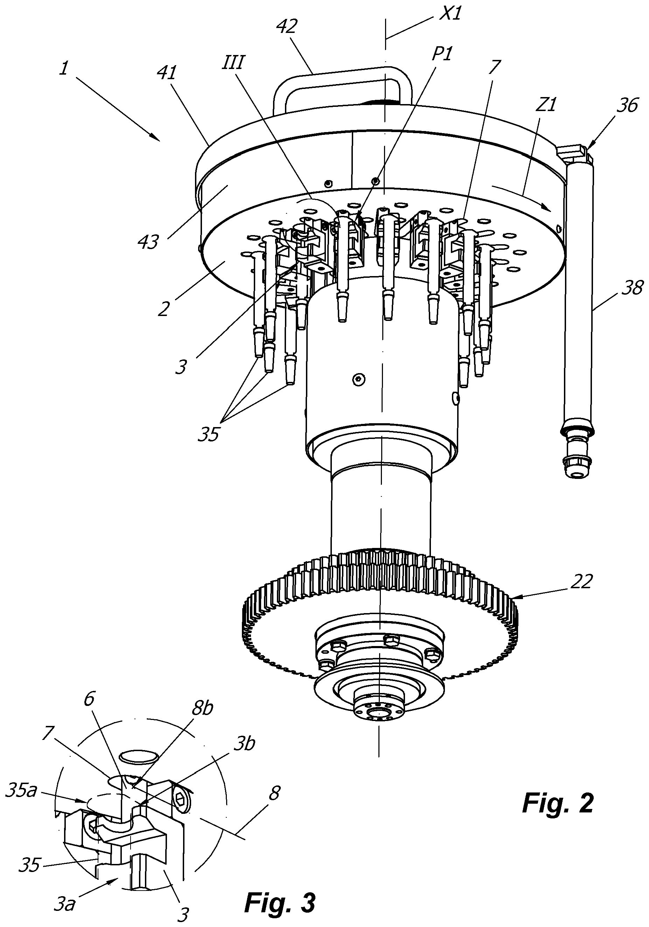

Still preferably, each support body **3** defines a support surface **3b** to which, during use, a corresponding receptacle **35** hangs through a corresponding reference surface **35a,** as shown in Fig. 3.

Advantageously, the above mentioned configuration of the support bodies **3** avoids the need that receptacles **35** be hold by clamps or other similar holding means, to advantage for the executive simplicity of the transferring device **1.**

The above mentioned first plate **2** is interposed between the two transport units **15, 16,** and the support bodies **3** are operatively associated to the first plate **2** in such a way that, following a rotation of the first plate **2** around the first rotation axis **X1,** each support body **3** are driven to face, alternately, a housing **19** of the first transport unit **15** and a housing **20** of the second transport unit **16** at the level of two corresponding and mutually different angular positions **P1, P2** that the support body **3** occupies around the first rotation axis **X1** and that, as mere exemplary purpose, are being represented in Fig. 1 at about 180° angular distance. In this way, each support body **3** can receive a corresponding receptacle **35** from a housing **19** of the first transport unit **15** and, respectively, pass it to a housing **20** of the second transport unit **16.**

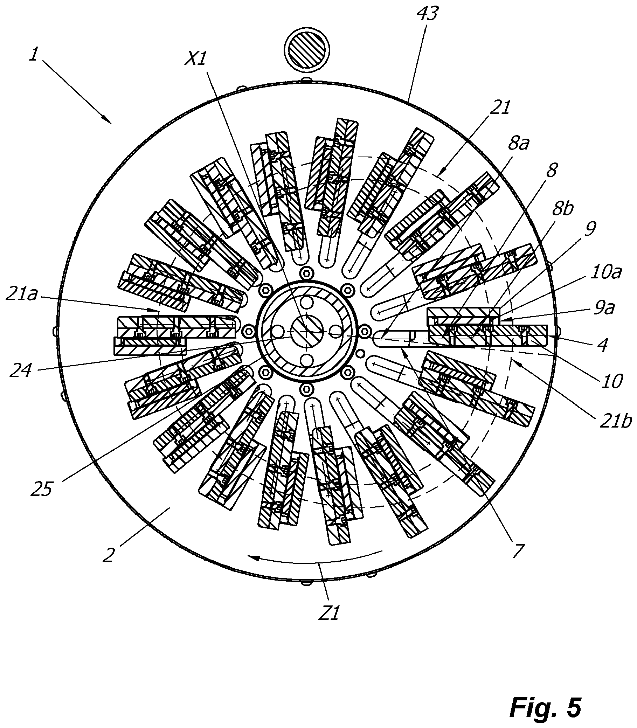

In particularly, and as shown in Figs. 4, 5, and 7, each support body **3** is movably connected to the first plate **2** through a drive unit **4** that defines, for the support body **3,** a predefined trajectory **8** that is indicated in Fig. 5 by dash-dot lines. The predefined trajectory **8** lies on a reference plane perpendicular on the first rotation axis **X1** and developing between a first end **8a** closer to the first rotation axis **X1** and a second end **8b** farther from the first rotation axis **X1.**

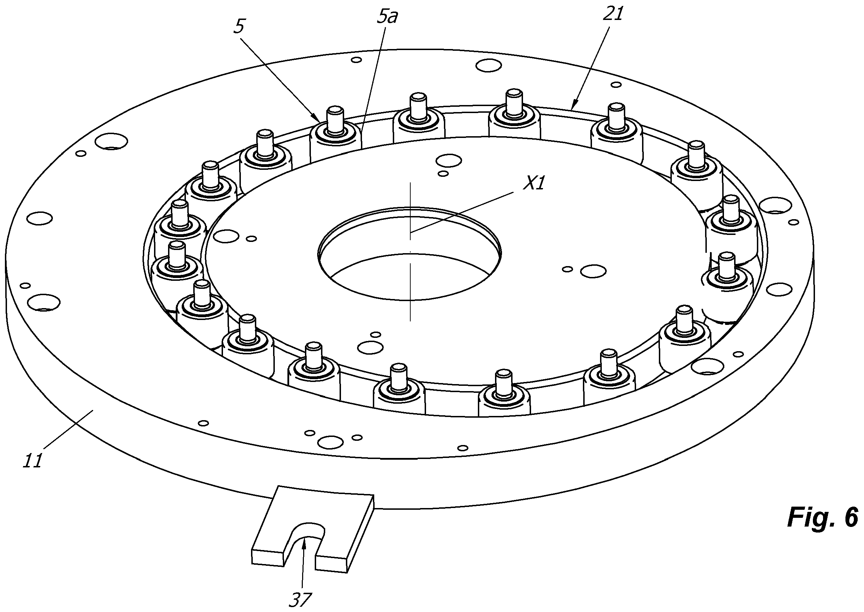

The machine **13** further comprises a guide contour **21,** shown in dotted line in Fig. 5, and better seen in Figs. 4 and 6, that is rigidly connected to the support structure **14** during use, and being slidingly engaged by a cam **5** that is rigidly connected to each support body **3** of the transferring device **1.** The guide contour **21** develops around the first rotation axis **X1** according to an annular trajectory having variable radius with respect to the same axis. As a consequence, during rotation of the first plate **2** around the first rotation axis **X1,** the cam **5** while sliding between two corresponding portions **21a, 21b** of the guide contour **21** that have different radii, i.e. different distances from the first rotation axis **X1,** induces a corresponding movement of the support body **3** according to the predefined trajectory **8.**

The above mentioned movement of the support body **3,** hence of the corresponding receptacle **35,** during the rotation of the first plate **2,** causes a successive mutual approach or departure between the two support bodies **3,** hence a corresponding change in pitch between them, as it can be seen more clearly in Figs. 1 and 5.

Evidently, an appropriate configuration of the guide contour **21** renders it possible to achieve a change in pitch of the transferring device **1,** such that the pitches corresponding to the above mentioned angular positions **P1** and **P2** coincide with the pitches of, respectively, the two transport units **15** and **16.**

It is hereby specified that the just mentioned pitch of the transferring device **1** is defined as the distance between two consecutive support bodies **3,** both assumed to be arranged in the same radial position, i.e. the position occupied by each one of them when passing through one of the above mentioned angular positions **P1** and **P2.** Therefore, the above mentioned distance is a conventional distance, that not necessarily corresponds to the actual distance between the above mentioned two support bodies **3.** In fact, when one of the two support bodies **3** is arranged in one of the above mentioned angular positions **P1** and **P2,** the other one might be arranged in a radial position that is different from that of the first body, since the latter is arranged in a different angular position.

In any case, the change in the above mentioned pitch between the two positions **P1** and **P2** is such as to allow to mutually synchronize the motorizations of the first plate **2** and of the two transport units **15, 16** in order that each support body **3** of the transferring device **1** is arranged aligned to housings **19, 20** of the transport units **15, 16** in correspondence to, respectively, the angular positions **P1** and **P2.**

As a consequence of the above, the transferring device **1** allows to transfer the receptacles **35** from the first transport unit **15** to the second transport unit **16.**

As regards the guide contour **21,** it preferably comprises a slot to slidingly house cam **5.** Nevertheless, in variant embodiments not shown in the drawings, the guide contour **21** may comprise a projecting edge, and cam **5** may define a housing in which the above mentioned projecting edge slides.

Still preferably, the cam **5** comprises one or more revolving bodies **5a** for engaging with the guide contour **21** in order to reduce friction and wear of the corresponding surfaces.

As regards the two transport units **15, 16,** they can take the form of corresponding transport wheels **17, 18,** that are rotatably associated to the support structure **14** according to corresponding rotation axes **X2** and **X3** that are parallel to each other and to the first rotation axis **X1,** and that are motorized in rotation according to corresponding rotation directions **Z2, Z3** in order to define corresponding circular trajectories of movement for the receptacles **35.** Preferably, the rotation directions **Z2** and **Z3** of the transport wheels **17** and **18** are the same, and they are opposite to the rotation direction **Z1** of the first plate **2.** Moreover, preferably, the housings **19, 20** are defined by corresponding recesses belonging to the peripheral edge of each one of the above mentioned transport wheels **17, 18.**

Nevertheless, it is clear that, in variant embodiments, the configuration of the transport units **15, 16** may be different from the one just described.

It can be understood that the transferring device **1** of the kind above described is functionally equivalent to a variable-pitch star wheel of the kind previously described, of which, in particular, shares the advantage to avoid generating scorings on the receptacles of the support bodies **3,** making it suited for the use with receptacles made in materials softer than glass.

According to the invention, and as shown in Figs. 4 and 7, each support body **3** and the corresponding cam **5** are arranged on mutually opposite sides with respect of the first plate **2** according to the direction of the first rotation axis **X1,** that is, the first plate **2** is interposed between them. Moreover, the support body **3** and the cam **5** are rigidly connected to one another through a connection body **6,** partially shown in Figs. 2 and 3, which is movably housed in a through slot **7** of the first plate **2** in order to transfer the motion of the cam **5** to the support body **3.**

Thanks to the configuration just disclosed, the support bodies **3** can be arranged to be superposed to the corresponding drive units **4** according to the direction of the rotation axis of the first plate **2,** i.e. axially, thus avoiding the need to have them radially projecting beyond the drive units **4.** As a consequence, the above mentioned configuration allows to maintain each support body **3** at a distance from the first rotation axis **X1** that is equal to, or smaller than, to that of the corresponding cam **5,** with the same overall dimension of the guide contour **21** compared to the known technique. This allows achieving the aim of limiting the radial overall dimension of the transferring device **1** compared to that achievable with the variable-pitch star wheels of known kind, and without prejudice to the positioning smoothness and precision of the support bodies.

As a consequence, the above described transferring device **1** is advantageously suited to be used in machines for moving receptacles that are particularly compact and in which the distance between the two transport units **15, 16** is limited, in particular those used in the pharmaceutical industry, or other machines for which a similar degree of compactness is needed.

Preferably, each drive unit **4** is configured in such a way that the predefined trajectory **8** of the corresponding support body **3** diverges from the radial direction on the plane of the said trajectory at least in correspondence of its first end **8a.** This may be seen in particular in Fig. 5, showing the radial direction passing through the first end **8a** of one of the predefined trajectories **8,** in dotted line.

Advantageously, the predefined trajectory **8** configured as just disclosed allows to reduce the distance between the first end **8a** and the first rotation axis **X1,** hence between the drive units **4** in correspondence of the above mentioned first end **8a,** yet without creating mutual interference between them. Hence, it is possible to further limit the distance of the support bodies **3** from the first rotation axis **X1** and, consequently, the radial dimension of the transferring device **1.**

Preferably, the predefined trajectory **8** is rectilinear, to the benefit of the executive simplicity of the drive unit **4.**

Also preferably, the drive unit **4** comprises a guide element **9** rigidly connected to the first plate **2** and to which a carriage **10** is slidably associated so as to define the predefined trajectory **8.** In turn, the carriage **10** rigidly supports the connection body **6.**

Preferably, the transverse dimensions of the connection body **6** correspond to the width of the through slot **7,** except for a minimum clearance allowing the mutual slide. As a consequence, possible lateral impacts suffered by the receptacle **35** and transmitted to the connection body **6** are born by the surface of the through slot **7,** without reflecting on the coupling surfaces between the guide element **9** and the carriage **10,** in order to prevent damages to the coupling surfaces. This advantage is the more relevant the higher the rotational speed of the first plate **2,** which is particularly high in machines to move small receptacles, like those used in the pharmaceutical industry.

Preferably and as shown in Fig. 4, the guide element **9** and the carriage **10** are interposed between the cam **5** and the first plate **2,** so that the carriage **10** be guided on two opposite sides by, respectively, the cam **5,** which slidingly cooperates with the guide contour **21,** and the connection body **6,** which is driven by the through slot 7 of the first plate **2,** to further advantage of the mechanical resistance and duration of the drive unit **4.**

Preferably, the guide element **9** comprises a first shaped element **9a** developing along the predefined trajectory **8** with uniform cross section, and on which a second shaped element **10a** slides, the second shaped element **10a** belonging to the carriage **10** and has a cross section that is conjugated with the cross section of the first shaped element **9a.** Advantageously, the configuration just disclosed allows to obtain a precise drive of the carriage **10,** hence of the support body **3,** along the predefined trajectory **8.**

Also preferably, between the first shaped element **9a** and the second shaped element **10a,** a recirculating ball bearing is interposed, not represented in the drawings but in itself known, and that, advantageously, foster the smoothness and the precision of slide between the two shaped elements **9a** and **10a.**

As regards the rotatable connection of the first plate **2** to the support structure **14,** that preferably occurs by means of a shaft **24,** a first end **24a** of which is rotatably associated to the support structure **14** through motorization means **22** for rotation. Preferably, the motorization means **22** comprise a gear connecting the shaft **24** to the motorization means of the transport units **15, 16** to, advantageously, achieve a precise mutual mechanical synchronization.

Furthermore, as shown in Fig. 4, the transferring device **1** comprises a tubular body **25** that is rotationally constrained to the first plate **2** and is configured to movably house a second end **24b** of the shaft **24** in order that the tubular body can be arranged coaxial to the shaft through a first translation **Y** according to a direction that is parallel to the first rotation axis **X1.**

Furthermore, the shaft **24** is provided with one or more reference contours **26,** one of which is shown in Fig. 4, that engage corresponding counter-contours **27** rigidly connected to the tubular body **25** in order to rotationally constrain it to the shaft **24** in a predefined mutual angular position, corresponding to the sync position with the transport units **15, 16.**

Preferably, the above mentioned reference contours **26** are least two, and are arranged mutually spaced in the angular direction around the first rotation axis **X1** such as to define a unique coupling angular position with two corresponding counter-contours **27** of the tubular body **25.** Also preferably, the tubular body **25** comprises further counter-contours, mutually spaced by an angle that is different compared to that of the above mentioned counter-contours, in order to allow that the transferring device 1 be coupled to another machine with a different sync position.

Anyway, each reference contour **26** is preferably configured as a dowel projecting from the shaft **24** according to the direction of the first rotation axis **X,** while the counter-contours **27** are corresponding holes made in the tubular body **25** and whose shapes are conjugated with the shapes of the corresponding dowels, in such a way as they can be coupled with the dowels by the above mentioned first translation **Y.**

Also preferably, the above mentioned reference contours **26** can be separated from the counter-contours **27** by a second translation of the tubular body **25** with respect of the shaft **24** according to a direction that is opposite to the direction of the first translation **Y.**

Advantageously, the transferring device **1** configured as above disclosed can be easily removed from the machine **13** for maintenance or replacement through the above mentioned second translation.

Still preferably, the reference contours **26** belong to a tubular coupling member **32** rigidly associated with the shaft **24** through an expansion joint **33** arranged in a gap defined between the shaft **24** and the tubular coupling member **32,** wherein the expansion joint can be widened or narrowed in radial direction in order to, respectively, mutually constrain or release the two elements.

Advantageously, the configuration just described allows to adjust the predefined angular position of the transferring device **1** and, more particularly, of its first plate **2,** with respect to the transport units **15, 16** in order to mutually synchronize them in order to compensate for possible assembly tolerances.

Preferably, the above mentioned tubular coupling member **32** defines a stop surface **32a** developing perpendicularly to the axis of the shaft **24** to support the tubular body **25** according to the direction of the same axis.

Preferably, the transferring device **1** also comprises a coupling unit **28** configured to be releasably constrained to the second end **24b** of the shaft **24,** in such a way as to push the tubular body **25** according to the direction of the axis of the shaft according to a direction concordant to that of the first translation **Y.**

Advantageously, the above mentioned coupling unit **28** allows to rapidly and easily constrain the transferring device **1** to, and release it from, the machine **13.**

Preferably, the coupling unit **28** comprises a first portion **29** that can be movably constrained to the shaft **24,** for example through screwing. The first portion **29** can take the form of a handwheel provided with a knurled surface in order to facilitate its manual screwing.

A second portion **30** is connected to the first portion **29** in order to being able to translate with respect to it according to the direction of the axis of the shaft **24.** An elastic element **31** is interposed between the first portion **29** and the second portion **30** to push the second portion **30** against the tubular body **25** when the first portion **29** is constrained to the shaft **24.**

Advantageously, the axial elasticity conferred by the elastic element **31** to the coupling unit **28** allows to compensate for possible dimensional errors of the transferring device **1** according to the direction of the first rotation axis **X1,** to advantage of the safety of the coupling.

Also preferably, the transferring device **1** is configured in such a way that, in operating conditions, the support bodies **3** are arranged below the first plate **2.** Advantageously, the configuration just disclosed prevents that, in case of a defective receptacle **35,** fragments of the receptacle and/or its content can possibly penetrate into the through slots **7** of the first plate **2,** thus preventing them from obstructing the sliding of the connection bodies **6** in the grooves themselves, or from damaging the drive units **4.**

The above disclosed configuration is preferably achieved by providing a second plate **11** to which the guide contour **21** belongs, and that, in operating conditions, is arranged above the first plate **2.** In this way, the drive units **4** can be arranged to be interposed between the two plates **2** and **11** while the support bodies **3** are arranged below the first plate **2.**

The second plate **11** is constrained to the support structure **14** so as to prevent its rotation with respect to the latter.

Preferably, the second plate **11** is also constrained to the first plate **2** in such a way that the transferring device **1,** composed of the first plate **2,** the second plate **11** and the drive units **4,** can be removed from the machine **13** as a single unit, thus facilitating its maintenance and replacement.

In particular, the second plate **11** is constrained to the first plate **2** in such a way as to being able to rotate with respect to the latter around the first rotation axis **X1,** while at the same time remaining constrained to it according to the direction of the axis itself. Preferably, this is achieved by means of roll bearings **39** interposed between the two plates **2, 11** and axially constrained to the two plates in a known way.

In the configuration just disclosed, preferably the rotation of the second plate **11** in respect to the support structure **14** is prevented by means of a stop element **36** belonging to the support structure **14** and that can be movably associated to a reference shaping **37** rigidly connected to the second plate **11.** Also preferably, the reference shaping **37** can be separated from the stop element **36** through a translation of the second plate **11** according to the direction of the first rotation axis **X1,** as shown for example in Fig. 7.

Still preferably, the stop element **36** is an element projecting from the support structure **14** of the machine **13** according to the direction of the first rotation axis **X1,** while the reference shaping **37** is a shaped recess whose profile, projected on a plane perpendicular to the rotation axis **X1,** is conjugated to the profile of the corresponding projection of the stop element **36** on the same plane, in such a way as to allow raising the second plate **11** according to the direction of the first rotation axis **X1,** and the subsequent release of the reference shaping **37** from the stop element **36.**

Also preferably, the stop element **36** belongs to an end of a beam **38** developing according to the direction of the rotation axis **X1,** and whose opposite end is constrained to the support structure **14** of the machine **13.**

Preferably, and as shown in particular in Fig. 7, the transferring device **1** comprises a cover **41** fixed to the second plate **11,** for example through screws, and having an edge **41a** that projects towards the first plate **2** in order to define a cylindrical recess below the cover **41.** Moreover, preferably, a cylindrical shield **43** is also present, fixed to the first plate **2** and projecting towards the second plate **11** in such a way that its upper edge is housed in the above mentioned cylindrical recess, as shown in Fig. 4. Advantageously, the cover **41** with the projecting edge **41a** and the cylindrical shield **43** just disclosed define a sort of container protecting the drive units **4** of the transferring device **1** from external agents.

Still preferably, the transferring device **1** comprises one or, more preferably, two handles **42,** fixed to the cover **41** to facilitate its lifting for maintenance or replacement operations.

Operatively, for using the above disclosed transferring device **1,** the tubular coupling member **32** is firstly fixed to the shaft **24** in the correct angular position.

Subsequently, the transferring device **1,** comprising the first plate **2,** the second plate **11,** the tubular body **25,** the cover **41,** and the shield **43,** mutually connected to form a single unit, is associated to the tubular coupling member **32** as previously described, in order to arrange it in the operating configuration represented in Fig. 4, possibly using the handles **42.** Then, the transferring device **1** is axially constrained to the shaft **24** by screwing the coupling unit **28** on it.

Evidently, in the cases of maintenance or replacement, the transferring device **1** can be easily removed from the machine **13,** simply by unscrewing the coupling unit **28** from the shaft **24** and extracting the transferring device **1.**

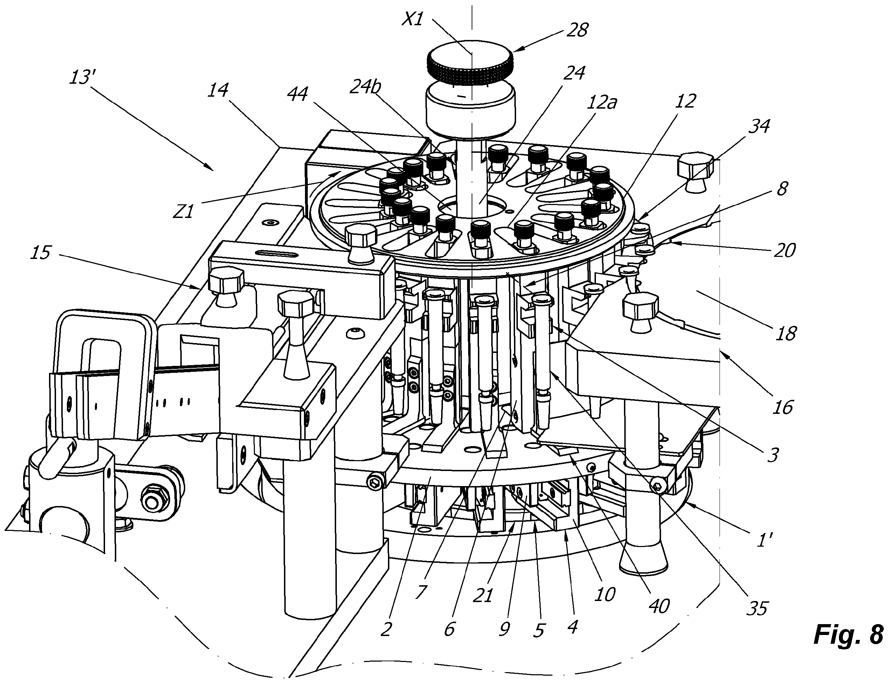

Fig. 8 shows a different embodiment of the invention, in which the transferring device, indicated therein by **1',** differs from that described above substantially for the presence of a third plate **12** facing the first plate **2** and rotatably constrained to it, for example by means of a tubular body **44** mutually connecting the two plates. The support bodies **3** are interposed between the first plate **2** and the third plate **12,** and the latter is provided with through slots **12a** that movably house the ends of the connection bodies **6,** projecting from the first plate **2** beyond the support bodies **3.**

Advantageously, the above mentioned transferring device **1'** allows to more efficiently absorb impacts that could possibly propagate from a receptacle **35** to the corresponding support body **3** and to the connection body **6** associated with it, since the latter is constrained on two opposite sides with respect to the support body **3** through the two through slots **7** and **12a** belonging to, respectively, the plates **2** and **12.**

The transferring device **1'** according to the above mentioned embodiment is particularly suited to be positioned, during use, so that the support bodies **3** are arranged above the first plate **2,** as shown in Fig. 8. in fact, in this configuration, the support bodies **3** must be arranged at a bigger distance from the first plate **2** compared to that of the previous embodiment, in order to hold the receptacles **35** raised from the underlying first plate **2.** As a consequence, the connection bodies **6** must be correspondingly longer, and the presence of the third plate **12** allows to guide them more efficiently and to absorb more efficiently the impacts coming from the receptacles **35.**

In this embodiment, the guide contour **21** can be made directly on a surface arranged below the first plate **2** and belonging to the support structure **14** of the machine, indicated by **13',** with no need for the second plate **11** as in the previous embodiment.

Still preferably, this second embodiment comprises a cover element **40** rigidly connected to each connection body **6,** preferably made in plastic material, arranged substantially in contact with the first plate **2** and configured to cover the corresponding through slot **7.** Advantageously, the cover element **40** limits the penetration in the slot of fragments possible coming from damaged receptacles **35** and/or of their content, as well as their passage to the underlying drive units **4.**

It is noticed that, for the sake of graphical simplicity, Fig. 8 omits some of the components used in the previous embodiment in order to constrain the first plate **2** to the shaft **24,** in particular the tubular body **25** on which the coupling unit **28** acts in order to maintain the axial position of the transferring device **1.** Nevertheless, it is clear that the above mentioned components are similar to those in the previous embodiment, with the due and obvious changes.

It is also noticed that the machine **13'** shown in Fig. 8 comprises a first transport unit **15** that is different compared to that of the previous embodiment, and which, in particular, is provided with a chute to drive the receptacles **35** towards a linear feeder of a kind in itself known. Nevertheless, as already noticed beforehand, the invention is not limited to the specific form of the transport units **15** and **16.**

From what has been disclosed so far, it is understood that the transferring device of the invention, as well as the machine comprising it, achieves the preset aims.

In particular, the transferring device can be used in a machine for moving receptacles in order to transfer the receptacles between two transport units of the machine having mutually different pitches.

Moreover, since there is no relative movement between the support bodies of the transferring device and the receptacles, any mutual scratching between them is prevented during transport.

Moreover, thanks to the connection bodies slidingly that are housed in the slots of the first plate to support the support bodies, it is possible to limit the radial dimensions of the transferring device with respect to the star-like transferring devices of known kind, in particular by arranging the support bodies aligned with the corresponding drive units according to the rotation axis of the first plate.

Moreover, the structure of the transferring device and the ways to couple it to the shaft of the machine allow to easily coupling and uncoupling it during the maintenance and replacement operations, because the transferring device can be easily coupled to, and removed from, the machine, as a single unit.

Moreover, the configuration of the transferring device being such that, in use, the receptacles are arranged below the first plate and the drive units, prevents fragments of defective receptacles that might break during movement, and/or product that might leak, from damaging the device. In the version having receptacles arranged above the first plate, a similar event is prevented through the provision of elements to cover the slots belonging to the first plate.

The invention is susceptible of changes and variants, provided that they fall within the scope of protection as defined by the attached claims.

For instance, the materials can be chosen according to the needs, yet without departing from the scope of the invention.

## Claims

1. Transferring device (1; 1') for the transport of receptacles (35) between two transport units (15, 16), comprising:
- a first plate (2) to be rotatably associated to a support structure (14) for rotation around a first rotation axis (X1);
- a plurality of support bodies (3), each support body (3) being configured to removably support a corresponding one of said receptacles (35) and being movably connected to said first plate (2) through a drive unit (4) which defines, for said support body (3), a predefined trajectory (8) lying on a reference plane perpendicular to said first rotation axis (X1) and developing between a first end (8a) that is closer to said first rotation axis (X1) and a second end (8b) that is farther from said first rotation axis (X1);
- a cam (5) rigidly connected to each support body (3) and configured to slide on a guide contour (21) rigidly connected to said support structure (14) in such a way as to cause a movement of said support body (3) according to said predefined trajectory (8) following a change in radius between two portions (21a, 21b) of said guide contour (21) with which said cam (5) cooperates during a corresponding rotation of said first plate (2) relative to said support structure (14);
wherein said support body (3) and said cam (5) are arranged on mutually opposite sides with respect to said first plate (2) according to the direction of said first rotation axis (X1); **characterized in that** the support body (3) and the cam (5) are rigidly connected to one another through a connection body (6) movably housed in a through slot (7) of said first plate (2).

2. Transferring device (1; 1') according to claim 1, **characterized in that** said drive unit (4) is configured in such a way that said predefined trajectory (8) diverges from the radial direction at least in said first end (8a).

3. Transferring device (1; 1') according to any previous claim, **characterized in that** said drive unit (4) comprises:
- a guide element (9) rigidly connected to said first plate (2);
- a carriage (10) slidingly connected to said guide element (9) and to which said connection body (6) is rigidly connected to define said predefined trajectory (8).

4. Transferring device (1) according to any previous claim, **characterized in that** it comprises a second plate (11) rotatably associated with said first plate (2) and to which said guide contour (21) belongs.

5. Transferring device (1') according to any claim form 1 to 3, **characterized in that** it comprises a third plate (12) rotationally constrained to said first plate (2) and provided with through slots (12a) that movably house said connection bodies (6).

6. Machine (13; 13') for the movement of receptacles (35), comprising:
- a support structure (14);
- two transport units (15, 16) associated with said support structure (14) for the movement of said receptacles (35), each transport unit (15, 16) comprising a corresponding plurality of housings (19, 20) configured to removably support corresponding receptacles (35), the housings (19) of a first transport unit (15) being mutually distanced by a pitch that is different compared to the pitch between the housings (20) of a second transport unit (16);
- a transferring device (1; 1') according to any previous claim, the first plate (2) of said transferring device (1; 1') being rotatably associated with said support structure (14) and arranged between said two transport units (15, 16) in such a way that each support body (3) of said transferring device (1; 1') can be positioned so as to face a housing (19, 20) of, alternatively, one and the other of said two transport units (15, 16) in correspondence with two respective mutually different angular positions (P1, P2) of said support body (3) around the first rotation axis (X1) of said transferring device (1; 1') in such a way as to being able to receive from a housing (19) of a first transport unit (15), and, respectively, deliver to a housing (20) of a second transport unit (16), one of said receptacles (35);
- a guide contour (21) rigidly connected to said support structure (14) and slidingly engaged by the cam (5) of said transferring device (1; 1');
said transferring device (1; 1') being configured in such a way that the pitches between said support bodies (3) at said two angular positions (P1, P2) coincide, respectively, with the pitches of said two transport units (15, 16).

7. Machine (13; 13') according to claim 6, **characterized in that** it comprises a shaft (24) having a first end (24a) rotatably associated with said support structure (14) through motorisation means (22) for its rotation, said transferring device (1; 1') comprising a tubular body (25) rotationally constrained to said first plate (2) and suited to be removably associated to a second end (24b) of said shaft (24) through a first translation (Y) according to a direction that is parallel to said first rotation axis (X1), said shaft (24) being provided with one or more reference contours (26) configured to engage respective counter-contours (27) that are rigidly connected to said tubular body (25) in order to rotationally constrain said tubular body (25) to said shaft (24).

8. Machine (13; 13') according to claim 7, **characterized in that** said reference contours (26) and said counter-contours (27) are mutually separable through a second translation of said tubular body (25) with respect of said shaft (24) according to a direction opposite to the direction of said first translation (Y), said transferring device (1; 1') comprising a coupling unit (28) configured to be constrained to said second end (24b) of said shaft (24) in such a way as to push said tubular body (25) according to a direction that is the same as the direction of said first translation (Y).

9. Machine (13; 13') according to claim 8, **characterized in that** said coupling unit (28) comprises:
- a first portion (29) to be movably constrained to said shaft (24);
- a second portion (30) connected to said first portion (29) so as to be able to translate according to the direction of the axis of said shaft (24);
- an elastic element (31) arranged between said first portion (29) and said second portion (30) to push said second portion (30) against said tubular body (25) when said first portion (29) is constrained to said shaft (24).

10. Machine (13; 13') according to any claim form 7 to 9, **characterized in that** it comprises a tubular coupling member (32) rigidly associated with said shaft (24) through an expansion joint (33), said tubular coupling member (32) comprising said reference contours (26).

## Patentansprüche

1. Transfervorrichtung (1; 1') für den Transport von Behältern (35) zwischen zwei Transporteinheiten (15, 16), umfassend:
- eine erste Platte (2), die einer Stützstruktur (14) für die Drehung um eine erste Drehachse (X1) drehbar zugeordnet wird;
- eine Vielzahl von Stützkörpern (3), wobei jeder Stützkörper (3) konfiguriert ist, um eine entsprechende der besagten Behälter (35) abnehmbar zu stützen, und mit der besagten ersten Platte (2) über eine Antriebseinheit (4) drehbar verbunden ist, die für den besagten Stützkörper (3) Folgendes definiert: eine vordefinierte Bahn (8), die auf einer Bezugsebene senkrecht zur besagten ersten Drehachse (X1) liegt und sich zwischen einem ersten Ende (8a), das näher an der besagten ersten Drehachse (X1) liegt, und einem zweiten Ende (8b), das weiter von der besagten ersten Drehachse (X1) entfernt ist, entwickelt;
- einen Nocken (5), der mit jedem Stützkörper (3) starr verbunden und konfiguriert ist, um auf einer Führungskontur (21), die mit der besagten Stützstruktur (14) starr verbunden ist, derart zu gleiten, um eine Bewegung des besagten Stützkörpers (3) entsprechend der besagten vordefinierten Bahn (8) zu bewirken, die einer Radiusänderung zwischen zwei Abschnitten (21a, 21b) der besagten Führungskontur (21) folgt, mit denen der besagte Nocken (5) während einer entsprechenden Drehung der besagten ersten Platte (2) relativ zur besagten Stützstruktur (14) zusammenwirkt;
wobei der besagte Stützkörper (3) und der besagte Nocken (5) in Bezug auf die besagte erste Platte (2) entsprechend der Richtung der besagten ersten Drehachse (X1) auf einander gegenüberliegenden Seiten angeordnet sind;
**dadurch gekennzeichnet, dass** der Stützkörper (3) und der Nocken (5) über einen Verbindungskörper (6), der in einem Durchgangsschlitz (7) der besagten ersten Platte (2) beweglich untergebracht ist, starr miteinander verbunden sind.

2. Transfervorrichtung (1; 1') nach Patentanspruch 1, **dadurch gekennzeichnet, dass** die besagte Antriebseinheit (4) derart konfiguriert ist, dass die besagte vordefinierte Bahn (8) zumindest am besagten ersten Ende (8a) von der Radialrichtung abweicht.

3. Transfervorrichtung (1; 1') nach jeglichem der vorhergehenden Patentansprüche, **dadurch gekennzeichnet, dass** die besagte Antriebseinheit (4) Folgendes umfasst:
- ein Führungselement (9), das mit der besagten ersten Platte (2) starr verbunden ist;
- einen Schlitten (10), der mit dem besagten Führungselement (9) gleitend verbunden ist und mit dem der besagte Verbindungskörper (6) starr verbunden ist, um die besagte vordefinierte Bahn (8) zu definieren.

4. Transfervorrichtung (1) nach jeglichem der vorhergehenden Patentansprüche, **dadurch gekennzeichnet, dass** sie eine zweite Platte (11) umfasst, die der besagten ersten Platte (2) drehbar zugeordnet ist und zu der die besagte Führungskontur (21) gehört.

5. Transfervorrichtung (1') nach jeglichem der Patentansprüche 1 bis 3, **dadurch gekennzeichnet, dass** sie eine dritte Platte (12) umfasst, die an der besagten ersten Platte (2) drehbar befestigt und mit Durchgangsschlitzen (12a) versehen ist, die die besagten Verbindungskörper (6) beweglich unterbringen.

6. Maschine (13; 13') für die Bewegung von Behältern (35), umfassend:
- eine Stützstruktur (14);
- zwei Transporteinheiten (15, 16), die der besagten Stützstruktur (14) für die Bewegung der besagten Behälter (35) zugeordnet sind, wobei jede Transporteinheit (15, 16) eine entsprechende Vielzahl von Gehäusen (19, 20) umfasst, die konfiguriert sind, um entsprechende Behälter (35) entfernbar zu stützen, wobei die Gehäuse (19) einer ersten Transporteinheit (15) durch einen Abstand, der vom Abstand zwischen den Gehäusen (20) einer zweiten Transporteinheit (16) abweicht, voneinander beanstandet sind;
- eine Transfervorrichtung (1; 1') nach jeglichem der vorhergehenden Patentansprüche, wobei die erste Platte (2) der besagten Transfervorrichtung (1; 1') der besagten Stützstruktur (14) drehbar zugeordnet und zwischen den besagten beiden Transporteinheiten (15, 16) angeordnet ist, derart, dass jeder Stützkörper (3) der besagten Transfervorrichtung (1; 1') so positioniert werden kann, um einem Gehäuse (19, 20) von abwechselnd der einen oder der anderen der besagten beiden Transporteinheiten (15, 16) in Entsprechung mit zwei jeweils voneinander unterschiedlichen Winkelpositionen (P1, P2) des besagten Stützkörpers (3) um die erste Drehachse (X1) der besagten Transfervorrichtung (1; 1') derart zugewandt zu sein, um eine der besagten Behälter (35) von einem Gehäuse (19) einer ersten Transporteinheit (15) aufnehmen bzw. an ein Gehäuse (20) einer zweiten Transporteinheit (16) abgeben zu können;
- eine Führungskontur (21), die mit der besagten Stützstruktur (14) starr verbunden ist und vom Nocken (5) der besagten Transfervorrichtung (1; 1') gleitend in Eingriff gebracht wird;
wobei die besagte Transfervorrichtung (1; 1') derart konfiguriert ist, dass die Abstände zwischen den besagten Stützkörpern (3) in den besagten beiden Winkelpositionen (P1, P2) jeweils mit den Abständen der besagten beiden Transporteinheiten (15, 16) übereinstimmen.

7. Maschine (13; 13') nach Patentanspruch 6, **dadurch gekennzeichnet, dass** sie Folgendes umfasst: eine Welle (24) mit einem ersten Ende (24a), die der besagten Stützstruktur (14) für ihre Drehung über Motorisierungsmittel (22) drehbar zugeordnet ist, wobei die besagte Transfervorrichtung (1; 1') einen rohrförmigen Körper (25) umfasst, der an der besagten ersten Platte (2) drehbar befestigt und dazu geeignet ist, durch eine erste Translation (Y) entsprechend einer Richtung, die parallel zur besagten ersten Drehachse (X1) ist, einem zweiten Ende (24b) der besagten Welle (24) entfernbar zugeordnet zu werden, wobei die besagte Welle (24) mit einer oder mehreren Referenzkonturen (26) versehen ist, die konfiguriert sind, um jeweilige Gegenkonturen (27) in Eingriff zu bringen, die mit dem besagten rohrförmigen Körper (25) starr verbunden sind, um den besagten rohrförmigen Körper (25) an der besagten Welle (24) drehbar zu befestigen.

8. Maschine (13; 13') nach Patentanspruch 7, **dadurch gekennzeichnet, dass** die besagten Referenzkonturen (26) und die besagten Gegenkonturen (27) durch eine zweite Translation des besagten rohrförmigen Körpers (25) in Bezug auf die besagte Welle (24) entsprechend einer Richtung, die der Richtung der besagten ersten Translation (Y) entgegengesetzt ist, voneinander trennbar sind, wobei die besagte Transfervorrichtung (1; 1') eine Kupplungseinheit (28) umfasst, die konfiguriert ist, um am besagten zweiten Ende (24b) der besagten Welle (24) befestigt zu werden, derart, dass der besagte rohrförmige Körper (25) entsprechend einer Richtung, die mit der Richtung der besagten ersten Translation (Y) gleich ist, gedrückt wird.

9. Maschine (13; 13') nach Patentanspruch 8, **dadurch gekennzeichnet, dass** die besagte Kopplungseinheit (28) Folgendes umfasst:
- einen ersten Abschnitt (29), der an der besagten Welle (24) beweglich befestigt wird;
- einen zweiten Abschnitt (30), der mit dem besagten ersten Abschnitt (29) so verbunden ist, um entsprechend der Richtung der Achse der besagten Welle (24) verschoben werden zu können;
- ein elastisches Element (31), das zwischen dem besagten ersten Abschnitt (29) und dem besagten zweiten Abschnitt (30) angeordnet ist, um den besagten zweiten Abschnitt (30) gegen den besagten rohrförmigen Körper (25) zu drücken, wenn der besagte erste Abschnitt (29) an der besagten Welle (24) befestigt ist.

10. Maschine (13; 13') nach einem der Patentansprüche 7 bis 9, **dadurch gekennzeichnet, dass** sie ein rohrförmiges Kupplungselement (32) umfasst, das über eine Dehnungsfuge (33) mit der besagten Welle (24) starr verbunden ist, wobei das besagte rohrförmige Kupplungselement (32) die besagten Referenzkonturen (26) umfasst.

## Revendications

1. Dispositif de transfert (1 ; 1') pour le transport de récipients (35) entre deux unités de transport (15, 16), comprenant :
- une première plaque (2) destinée à être associée de manière rotative à une structure de support (14) pour la rotation autour d'un premier axe de rotation (X1) ;
- une pluralité de corps de support (3), chaque corps de support (3) étant configuré pour supporter de manière amovible un récipient correspondant (35) et étant relié de manière mobile à ladite première plaque (2) par l'intermédiaire d'une unité d'entraînement (4) qui définit, pour ledit corps de support (3), une trajectoire prédéfinie (8) située sur un plan de référence perpendiculaire audit premier axe de rotation (X1) et se développant entre une première extrémité (8a) qui est plus proche dudit premier axe de rotation (X1) et une deuxième extrémité (8b) qui est plus éloignée dudit premier axe de rotation (X1) ;
- une came (5) rigidement reliée à chaque corps de support (3) et configurée pour glisser sur un contour de guidage (21) rigidement relié à ladite structure de support (14) de manière à provoquer un mouvement dudit corps de support (3) selon ladite trajectoire prédéfinie (8) suite à un changement de rayon entre deux portions (21a, 21b) dudit contour de guidage (21) avec lesquelles ladite came (5) coopère lors d'une rotation correspondante de ladite première plaque (2) par rapport à ladite structure de support (14) ;
où ledit corps de support (3) et ladite came (5) sont disposés sur des côtés mutuellement opposés par rapport à ladite première plaque (2) selon la direction dudit premier axe de rotation (X1) ;
**caractérisé en ce que** le corps de support (3) et la came (5) sont reliés rigidement l'un à l'autre par l'intermédiaire d'un corps de connexion (6) logé de manière mobile dans une fente passante (7) de ladite première plaque (2).

2. Dispositif de transfert (1 ; 1') selon la revendication 1, **caractérisé en ce que** ladite unité d'entraînement (4) est configurée de telle sorte que ladite trajectoire prédéfinie (8) s'écarte de la direction radiale au moins dans ladite première extrémité (8a).

3. Dispositif de transfert (1 ; 1') selon l'une quelconque des revendications précédentes, **caractérisé en ce que** ladite unité d'entraînement (4) comprend :
- un élément de guidage (9) rigidement relié à ladite première plaque (2) ;
- un chariot (10) relié de manière coulissante à l'élément de guidage (9) et auquel ledit corps de connexion (6) est relié de manière rigide pour définir ladite trajectoire prédéfinie (8).

4. Dispositif de transfert (1) selon l'une quelconque des revendications précédentes, **caractérisé en ce qu'**il comprend une deuxième plaque (11) associée de manière rotative à ladite première plaque (2) et à laquelle appartient ledit contour de guidage (21).

5. Dispositif de transfert (1') selon l'une quelconque des revendications 1 à 3, **caractérisé en ce qu'**il comprend une troisième plaque (12) bloquée de manière rotative à ladite première plaque (2) et pourvue de fentes passantes (12a) qui logent de manière mobile lesdits corps de connexion (6).

6. Machine (13 ; 13') pour le déplacement de récipients (35), comprenant :
- une structure de support (14) ;
- deux unités de transport (15, 16) associées à ladite structure de support (14) pour le déplacement desdits récipients (35), chaque unité de transport (15, 16) comprenant une pluralité correspondante de logements (19, 20) configurés pour supporter de manière amovible des récipients correspondants (35), les logements (19) d'une première unité de transport (15) étant mutuellement distants d'un pas qui est différent par rapport au pas entre les logements (20) d'une deuxième unité de transport (16) ;
- dispositif de transfert (1 ; 1') selon l'une quelconque des revendications précédentes, la première plaque (2) dudit dispositif de transfert (1 ; 1') étant associée de manière rotative à ladite structure de support (14) et disposée entre lesdites deux unités de transport (15, 16) de telle sorte que chaque corps de support (3) dudit dispositif de transfert (1 ; 1') puisse être positionné de manière à être tourné vers un logement (19, 20) de, alternativement, l'une et l'autre desdites deux unités de transport (15, 16) à hauteur de deux positions angulaires respectives mutuellement différentes (P1, P2) dudit corps de support (3) autour du premier axe de rotation (X1) dudit dispositif de transfert (1 ; 1') de manière à pouvoir recevoir d'un logement (19) d'une première unité de transport (15), et, respectivement, délivrer à un logement (20) d'une seconde unité de transport (16), l'un desdits récipients (35) ;
- un contour de guidage (21) relié rigidement à ladite structure de support (14) et engagé de manière coulissante au moyen de la came (5) dudit dispositif de transfert (1 ; 1') ;
ledit dispositif de transfert (1 ; 1') étant configuré de telle sorte que les pas entre lesdits corps de support (3) auxdites deux positions angulaires (P1, P2) coïncident respectivement avec les pas desdites deux unités de transport (15, 16).

7. Machine (13 ; 13') selon la revendication 6, **caractérisée en ce qu'**elle comprend un arbre (24) ayant une première extrémité (24a) associée de manière rotative à ladite structure de support (14) par l'intermédiaire de moyens de motorisation (22) pour sa rotation, ledit dispositif de transfert (1 ; 1') comprenant un corps tubulaire (25) bloqué de manière rotative à ladite première plaque (2) et apte à être associé de manière amovible à une seconde extrémité (24b) dudit arbre (24) par une première translation (Y) selon une direction parallèle audit premier axe de rotation (X1), ledit arbre (24) étant pourvu d'un ou plusieurs contours de référence (26) configurés pour s'engager dans des contre-contours correspondants (27) qui sont reliés rigidement audit corps tubulaire (25) afin de bloquer de manière rotative ledit corps tubulaire (25) audit arbre (24).

8. Machine (13 ; 13') selon la revendication 7, **caractérisée en ce que** lesdits contours de référence (26) et lesdits contre-contours (27) sont mutuellement séparables par une deuxième translation dudit corps tubulaire (25) par rapport audit arbre (24) selon une direction opposée à la direction de ladite première translation (Y), ledit dispositif de transfert (1 ; 1') comprenant une unité de couplage (28) configurée pour être fixée à ladite deuxième extrémité (24b) dudit arbre (24) de manière à pousser ledit corps tubulaire (25) selon une direction identique à la direction de ladite première translation (Y).

9. Machine (13 ; 13') selon la revendication 8, **caractérisée en ce que** ladite unité de couplage (28) comprend :
- une première portion (29) destinée à être bloquée de manière mobile sur ledit arbre (24) ;
- une deuxième portion (30) reliée à ladite première portion (29) de manière à pouvoir se déplacer selon la direction de l'axe dudit arbre (24) ;
- un élément élastique (31) disposé entre ladite première portion (29) et ladite deuxième portion (30) pour pousser ladite deuxième portion (30) contre ledit corps tubulaire (25) lorsque ladite première portion (29) est fixée à ladite tige (24).

10. Machine (13 ; 13') selon l'une quelconque des revendications 7 à 9, **caractérisée en ce qu'**elle comprend un élément de couplage tubulaire (32) associé rigidement audit arbre (24) par l'intermédiaire d'un joint d'expansion (33), ledit élément de couplage tubulaire (32) comprenant lesdits contours de référence (26).
